# EUROPÄISCHE PATENTSCHRIFT

(11) **EP 0 466 132 B1**
(45) Veröffentlichungstag und Bekanntmachung des Hinweises auf die Patenterteilung: **12.10.1994**
(21) Anmeldenummer: 91111494.0
(22) Anmeldetag: 10.07.1991
(51) Int. Cl.: H02H 5/00

(54) **Schutzvorrichtung zum Schutz von Elektroniksystemen gegen Gammastrahlung**
Protection device for the protection of electronic systems against gamma-rays
Dispositif de protection de systèmes électroniques contre des rayonnements gamma

(30) Priorität: 13.07.1990 DE 4022419
(43) Veröffentlichungstag der Anmeldung: 15.01.1992
(73) Patentinhaber: Bodenseewerk Gerätetechnik GmbH, 88662 Überlingen (DE)
(72) Erfinder: Maruhn, Paul, Dipl.-Ing., W-7776 Owingen (DE)
(74) Vertreter: Weisse, Jürgen, Dipl.-Phys. Patentanwalt

(56) Entgegenhaltungen:
- EP-A- 0 375 120
- US-A- 3 886 379
- US-A- 4 687 622
- EDN ELECTRICAL DESIGN NEWS. 22. August 1985, NEWTON, MASSACHUSETTS US Seiten 138 - 140; LARRY LONGDON: 'Hybrid detector protects circuits from radiation'

## Beschreibung

Die Erfindung betrifft eine Schutzvorrichtung zum Schutz von Elektroniksystemen gegen Gammastrahlung, enthaltend
(a) einen auf Gammastrahlung ansprechenden Detektor,
(b) einen Schwellwertschalter, der von dem Ausgangssignal des Detektors beaufschlagt ist,
(c)einen Ereignisspeicher, der durch den Schwellwertschalter gesetzt wird, wenn der Schwellwertschalter anspricht, und
(d) Zeitschaltmittel zum Aus- und Wiedereinschalten des Elektroniksystems nach einem Gammastrahlung hervorrufenden Ereignis, wobei der Ereignisspeicher nach dem Wiedereinschalten des Elektroniksystems zurückgesetzt werden kann.

Bei der Explosion von Kernwaffen entsteht u.a. Gammastrahlung hoher Intensität. Im zeitlichen Ablauf ergibt die Gammastrahlung eine kurzzeitige Spitze hoher Intensität. Diese Gammastrahlung hat stark ionisierende Wirkung. Dadurch entstehen Photoströme in den Halbleiterelementen von Elektroniksystemen. Solche Photoströme führen zu Informationsverlusten in Digitalrechnern. Weiterhin können sog. "Latchup-Effekte" auftreten. Durch solche Lachup-Effekte werden Ströme in den elektronischen Geräten erzeugt, die zu einem Totalausfall der Geräte und nach kurzer Zeit zu permanenter, thermischer Zerstörung der Geräte führen.

Die Mechanismen, nach denen die Gammastrahlung die Elektronik schädigt, hängen von der Technologie der Halbleiterbauelemente ab. Die üblichen Halbleiter-Technologien wie CMOS sind gegen die Wirkung der geschilderten Initialstrahlung nicht resistent. Es gibt strahlungsresistente Halbleiterbauelemente. Solche strahlungsresistenten Halbleiterbauelemente sind jedoch nur in geringer Typenauswahl und zu hohen Kosten erhältlich. Der Aufbau des gesamten Elektroniksystems aus solchen Bauelementen ist daher praktisch nicht möglich.

Durch einen Aufsatz "Hybrid detector protects circuits from radiation" aus "EDN ELECTRICAL DESIGN NEWS" Bd. 30, August 1985, Seiten 133-140 ist eine Schutzvorrichtung zum Schutz von Elektroniksystemen gegen Gammastrahlen bekannt, durch welche das Elektroniksystem bei Auftreten von Gammastrahlen infolge eines "nuklearen Ereignisses" abgeschaltet wird. Die Schutzvorrichtung enthält einen Sensor mit einem auf Gammastrahlung ansprechenden Detektor in Form einer PIN-Diode. Der Detektor liegt an einem Schwellwertschalter. Es ist ferner ein Ereignisspeicher vorgesehen, der bei einem nuklearen Ereignis gesetzt wird. Ferner enthält der Sensor Zeitschaltmittel, die einen Abschaltimpuls vorgegebener Länge liefern. Bei der bekannten Schutzvorrichtung werden die Zeitschaltmittel von dem Ausgangssignal des Schwellwertschalters gestartet. Der Ereignisspeicher wird von dem Ausgangssignal der Zeitschaltmittel gesetzt und durch ein Rücksetzsignal zurückgesetzt. Die bekannte Schutzvorrichtung enthält weiter eine Leuchtdiode im Sensor, durch welche der Detektor zu Prüfzwecken mit Licht beaufschlagt werden kann. Durch den Abschaltimpuls wird eine Schaltung angesteuert, welche energiespeichernde Kondensatoren kurzschließt. Bei der bekannten Schutzvorrichtung ist weiterhin ein Speicher vorgesehen, der gegen ionisierende Strahlung "gehärtet" ist. Durch den Abschaltimpuls wird ein Einschreiben in diesen Speicher unterbunden, so daß keine Störinformationen, wie sie durch das nukleare Ereignis auftreten können, eingeschrieben werden können.

Eine ähnliche Schutzvorrichtung zeigt die EP-A-0 375 120. Auch dort werden Zeitschaltmittel von dem Detektor unmittelbar angestoßen. Die Zeitschaltmittel liefern ein erstes Abschaltsignal, durch das die Versorgungsspannung für das Elektroniksystem abschaltbar ist. Die Zeitschaltmittel liefern weiter ein zweites Abschaltsignal, dessen Zeitintervall vollständig in dem Zeitintervall des ersten Abschaltsignals liegt. Durch dieses zweite Abschaltsignal werden über Schaltermittel energiespeichernde Kondensatoren des Elektroniksystems entladen. Auch bei dieser bekannten Schutzvorrichtung wird der Ereignisspeicher von dem (ersten) Abschaltsignal der Zeitschaltmittel gesetzt.

Bei den bekannten Schutzvorrichtungen werden die Zeitschaltmittel unmittelbar von dem Detektor bzw. dem Schwellwertschalter angestoßen.

Der Erfindung liegt die Aufgabe zugrunde, eine Schutzvorrichtung zum Schutz von Elektroniksystemen gegen Gammastrahlung so auszubilden, daß stets eine einwandfreie und eindeutige Funktion der Schutzvorrichtung selbst unbeeinflußt von Störungen durch die Gammastrahlung gewährleistet ist.

Erfindungsgemäß wird diese Aufgabe dadurch gelöst, daß
(e) die Zeitschaltmittel erst durch ein Ausgangssignal des Ereignisspeichers nach Setzen des Ereignisspeichers auslösbar sind.

Bei Auftreten einer Intensität der Gammastrahlung oberhalb der Ansprechschwelle des Schwellwertschalter wird der Ereignisspeicher gesetzt. Dadurch werden die Zeitschaltmittel aktiviert. Diese schalten das Elektroniksystem für eine bestimmte Zeit ab. Dadurch tritt zwar ein Informationsverlust der variablen Daten ein. Diese Information ist aber sowieso durch die Gammastrahlung verfälscht. Latchup-Effekte werden gelöst. Damit wird die permanente Zerstörung von elektronischen Geräten verhindert. Nach einem bestimmten Zeitintervall kann das Elektroniksystem wieder eingeschaltet und neu initialisiert werden. Die variablen Daten sind zwar verloren. Das Elektroniksystem selbst ist aber wieder funktionsfähig.

Müssen wichtige Daten über das Strahlungsereignis und über die Unterbrechungszeit hinaus erhalten bleiben, enthält das Elektroniksystem zweckmäßigerweise einen gegen Gammastrahlung geschützten Arbeitsspeicher, der nach dem Wiedereinschalten und einer Neuinitialisierung des Elektroniksystems auf wichtige Daten vor dem Strahlungsereignis zurückgreifen kann.

Durch die erfindungsgemäße Schutzvorrichtung ist es nicht erforderlich, das gesamte Elektroniksystem mit stahlungsresistenten Halbleiterbauelementen aufzubauen. Lediglich der Sensor und ggf. der Arbeitsspeicher -oder nur Teilbereiche des Arbeitsspeichers- müssen strahlungsresistent sein. Spezialentwicklungen mit den Sonderbauteilen der strahlungsresistenten Halbleitertechnologie werden vermieden.

Bei der erfindungsgemäßen Ausbildung der Schutzvorrichtung wird erst der Ereignisspeicher gesetzt. Es kann dafür gesorgt werden, daß dies eindeutig nur nach einem nuklearen Ereignis geschieht und dieses Setzen andererseits durch ein solches nukleares Ereignis und den dadurch hervorgerufenen Gamma-Puls nicht beeinträchtigt wird. Erst von dem gesetzten Ereignisspeicher werden die Zeitschaltmittel angestoßen. Die Zeitschaltmittel werden erst aktiviert, wenn der Gamma-Puls und die dadurch hervorgerufenen Photoströme abgeklungen sind. Dadurch wird einer Fehlfunktion der Zeitschaltmittel vorgebeugt.

Das Elektroniksystem, das aus einer Vielzahl von einzelnen Geräten bestehen kann, wird durch einen Sensor als gemeinsame Schutzvorrichtung geschützt.

Ausgestaltungen der Erfindung sind Gegenstand der Unteransprüche.

Zwei Ausführungsbeispiele der Erfindung sind nachstehend unter Bezugnahme auf die zugehörigen Zeichnungen näher erläutert.
- Fig.1: zeigt als Blockdiagramm eine Schutzvorrichtung zum Schutz gegen Informationsverlust und Latchup bei Digitalrechnern.
- Fig.2: zeigt den Zeitablauf der verschiedenen Zustände in dem Sensor für Gammastrahlung bei der Schutzvorrichtung nach Fig.1.
- Fig.3: zeigt Einzelheiten einer Testschaltung, des Detektors, des Schwellwertschalters und einer Resetschaltung bei der Schutzvorrichtung von Fig.1.
- Fig.4: zeigt Einzelheiten des Ereignisspeichers und der Zeitschaltmittel bei der Schutzvorrichtung nach Fig.1.
- Fig.5: zeigt die Anordnung von Fig.3 und 4 relativ zueinander in einem Gesamtschaltbild.
- Fig.6: zeigt schematisch die Schaltung zum Entladen von energiespeichernden Kondensatoren des Elektroniksystems bei Minimierung der Unterbrechungszeiten.

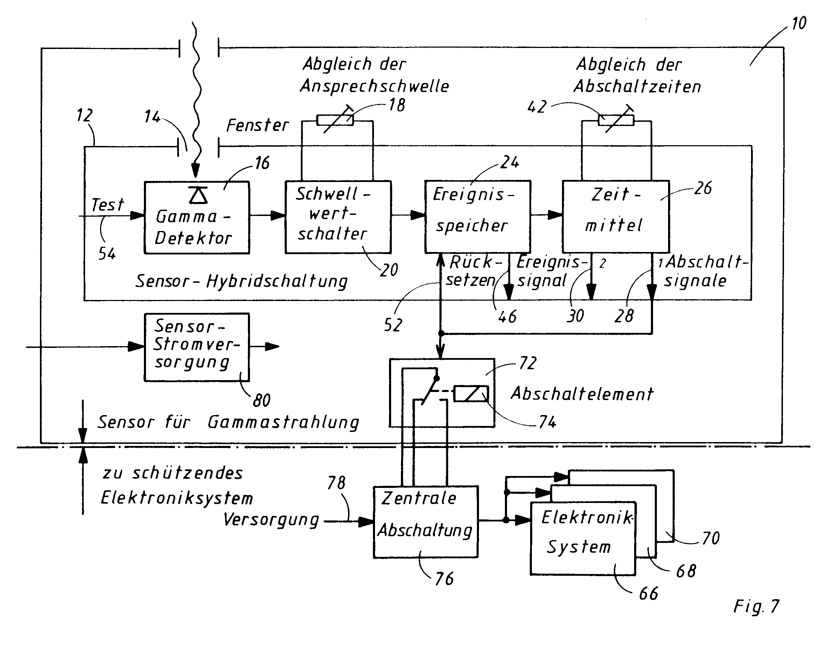

- Fig.7: zeigt als Blockdiagramm eine Schutzvorrichtung, bei welcher ein einziger Sensor ein aus mehreren einzelnen Elektronischen Geräten bestehendes Elektroniksystem gegen die Folgen eines Stoßes von Gammastrahlung schützt.

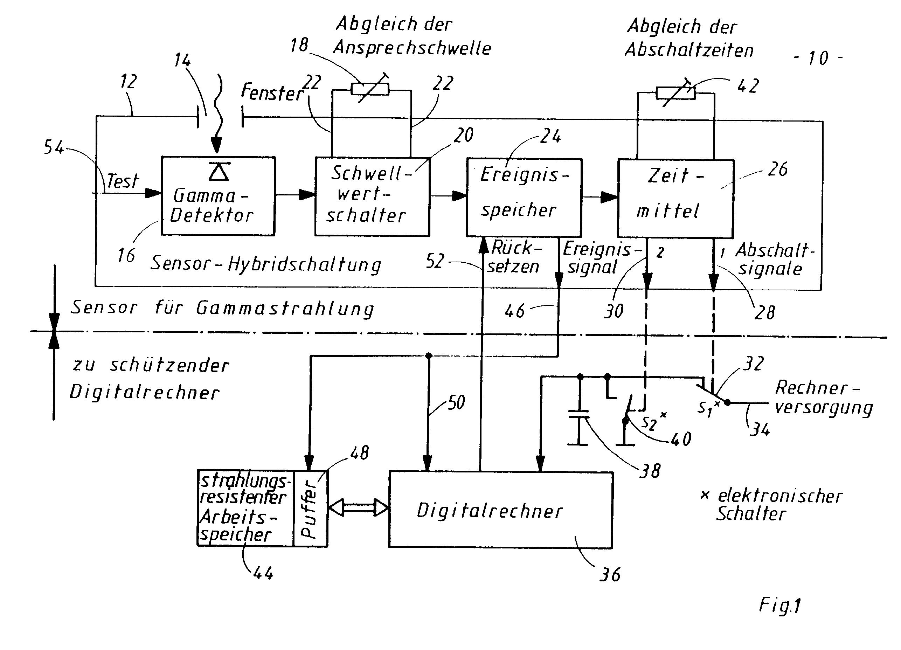

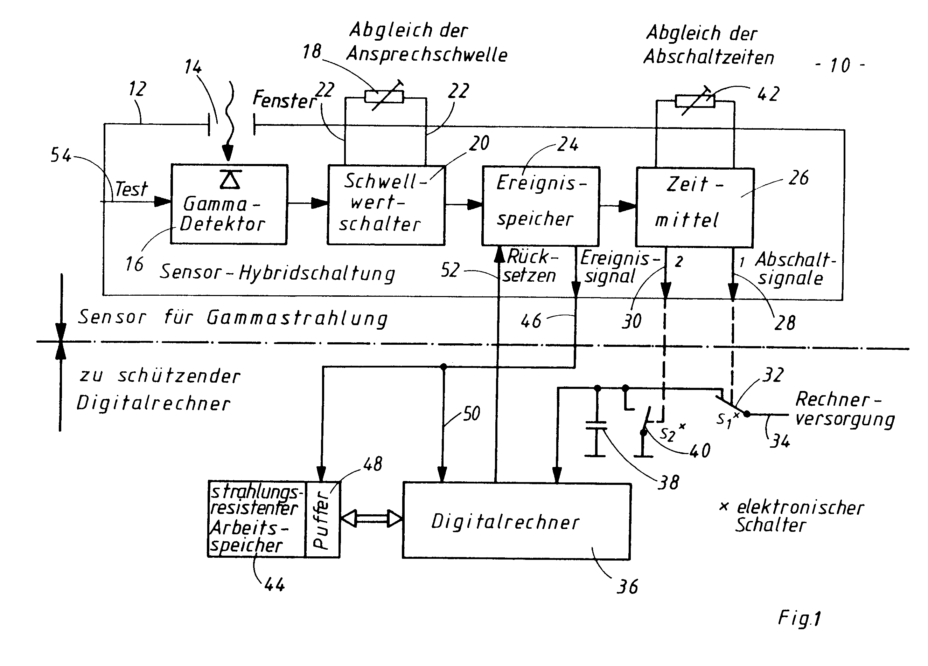

In Fig.1 ist mit 10 generell ein Sensor bezeichnet, der auf Gammastrahlung anspricht und Abschaltsignale liefert. Der Sensor 10 ist als Dickschicht-Hybridschaltung mit strahlungsresistenten Halbleiterbauteilen aufgebaut. Die Dickschicht-Hybridschaltung ist metallisch gekapselt in einem Metallgehäuse 12 angeordnet. Das Metallgehäuse 12 ist mit einem Fenster 14 aus Glas versehen. Hinter dem Fenster 14 sitzt ein Gamma-Detektor 16. Der Gamma-Detektor 16 ist eine in Sperrrichtung betriebene, als PIN-Diode ausgebildete Photodiode. Diese Photodiode liefert einen Photostrom, welcher der Intensität der Gammastrahlung im wesentlichen proportional ist. Dieser Photostrom wird mittels eines ohmschen Widerstandes 18 in eine dazu proportionale Spannung als Ausgangssignal des Gamma-Detektors 16 umgesetzt.

Das Ausgangssignal des Gamma-Detektors 16 ist auf einen Schwellwertschalter 20 geschaltet. Dieser Schwellwertschalter ist ein Differenzverstärker. Die Ansprechschwelle des Schwellwertschalters 20 ist an dem als Einstellwiderstand ausgebildeten Widerstand 18 in weiten Grenzen einstellbar. Der Widerstand 18 ist außerhalb des Metallgehäuses 12 angeordnet und mit dem innerhalb des Metallgehäuses angeordneten Schwellwertschalter 20 über Anschlußstifte 22 verbunden.

Durch den Schwellwertschalter 20 wird bei Überschreiten der Ansprechschwelle ein "Ereignisspeicher" 24 gesetzt. Der Ereignisspeicher ist ein bistabiles Speicherelement. Um eine hohe Resistenz des Sensors 10 gegen Gammastrahlung zu errreichen, ist der Ereignisspeicher 24 als Brückenschaltung ausgebildet. Bei Anlegen der Versorgungsspannung oder auf ein Rücksetzsignal hin wird der Ereignisspeicher 24 in den Normalzustand "kein Ereignis" gebracht.

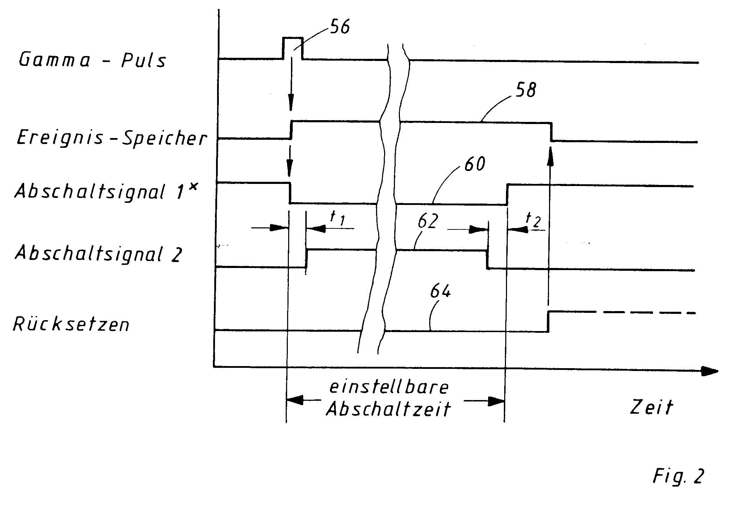

Der Ereignisspeicher 24 aktiviert, wenn er durch ein Ereignis, nämlich ein Ansprechen des Schwellwertschalters infolge von Gammastrahlung, gesetzt wird, Zeitschaltmittel 26. Die Zeitschaltmittel 26 erzeugen Abschaltsignale an Ausgängen 28 und 30. Ein erstes Abschaltsignal am Ausgang 28 wird mit dem Ereignissignal und Setzen des Ereignisspeichers ausgelöst und steht für ein vorgegebenes Abschaltintervall an. Ein zweites Abschaltsignal am Ausgang 30 steht während eines Intervalls an, das stets vollständig innerhalb des Abschaltintervalles des ersten Abschaltsignals liegt. Das Intervall des zweiten Abschaltsignals beginnt mit einer Verzögerung t₁ gegenüber dem Abschaltintervall des ersten Abschaltsignals und endet um eine Zeit t₂ früher als das Abschaltintervall des ersten Abschaltsignals (Fig.2).

Der Sensor 10 wird mit nur einer Versorgungsspannung von 5 Volt gespeist.

Das erste Abschaltsignal betätigt einen elektronischen Schalter 32, durch welchen die an einem Eingang 34 anliegende Stromversorgung eines Digitalrechners 36 abgeschaltet wird. In der Versorgungsleitung des Digitalrechners 36 liegen Kondensatoren 38. Damit die Abschaltung der Stromversorgung des Digitalrechners 36 sehr schnell erfolgt, müssen diese Kondensatoren nach Abschalten der Stromversorgung schnell entladen werden. Das geschieht durch einen elektronischen Schalter 40. Der elektronische Schalter 40 wird von der zweiten Abschaltsignal am Ausgang 30 betätigt. Die Tatsache, daß das zweite Abschaltsignal gegenüber dem ersten Abschaltsignal verzögert einsetzt und vor dem ersten Abschaltsignal endet, stellt sicher, daß kein Kurzschluß auftreten kann. Wenn der Schalter 40 schließen würde, bevor der Schalter 32 geöffnet hat, würde die Stromversorgung kurzgeschlossen. Die Abschaltzeiten können gemeinsam mittels eines Abgleichwiderstandes 42 eingestellt werden. Die Einstellung ändert aber nichts daran, daß das Intervall des zweiten Abschaltsignals stets innerhalb des Intervalls des ersten Abschaltsignals liegt.

Durch die kurzzeitige Unterbrechung der Stromversorgung des Digitalrechners werden Latchup-Effekte gelöst. Eine Zerstörung des Rechners wird dadurch verhindert.

Der Digitalrechner 36 ist mit einem strahlungsresistenten Arbeitsspeicher 44 verbunden. In diesem Arbeitsspeicher sind die Daten gespeichert, die über das Strahlungsereignis und die Unterbrechungszeit gerettet werden müssen. Der Arbeitsspeicher 44 ist aus strahlungsresistenten Halbleiterbauteilen aufgebaut, so daß er durch die Gammastrahlung nicht beeinträchtigt werden kann. Allerdings könnte der Digitalrechner 36, wenn er durch die Strahlungsbeaufschlagung einen Programmkollaps erlitten hat, die Daten in dem Arbeitsspeicher zerstören. Aus diesem Grunde verriegelt das Ereignissignal an einem Ausgang 46 des Ereignisspeichers sofort mit dem Auftreten der hohen Strahlungsintensität die Verbindung zwischen Arbeitsspeicher 44 und Digitalrechner über einen Puffer 48.

Nach Ablauf der Abschaltzeit wird die Stromversorgung für den Digitalrechner 36 durch Wegfall des ersten Abschaltsignals am Ausgang 28 der Zeitschaltmittel 26 wieder eingeschaltet. Kurz zuvor hatte der Schalter 40 wieder geöffnet. Das Ereignissignal vom Ausgang 46 des Ereignisspeichers 24 kennzeichnet über einen Eingang 50 dem Digitalrechner eine Neuinitialisierung nach einem "Gamma-Dosisleistungs" - Ereignis oder "nuklearem " Ereignis. Es erfolgt jetzt eine Neuinitialisierung des Digitalrechners. Nach erfolgter Neuinitialisierung wird der Ereignisspeicher 24 von dem Digitalrechner 36 über Eingang 52 wieder zurückgesetzt. Damit befindet sich das System aus Digitalrechner 36 und Sensor 10 wieder im Normalbetrieb.

Der Sensor 10 kann auf Funktionsfähigkeit geprüft werden. Das kann ohne Gammastrahlung auf zwei verschiedene Weisen geschehen. Einmal können elektrische Stimulationssignale auf den Sensor 10 aufgeschaltet werden, durch welche der Detektor 16 auf Kurzschluß und auf Unterbrechung getestet wird. Das ist in Fig.1 durch einen Eingang 54 dargestellt.

Zum anderen kann der Detektor 16 durch das Fenster 14 hindurch mit Lichtblitzen beaufschlagt werden. Dieser Lichtblitz erzeugt einen Photostrom des als PIN-Diode ausgebildeten Detektors 16. Mit diesem Photostrom erfolgt eine Überprüfung des gesamten Sensors 10.

Fig.2 zeigt den zeitlichen Verlauf der verschiedenen Signale: Die erste Zeile in Fig.2 zeigt den Gammapuls 56. Der Gammapuls 56 setzt den Ereignisspeicher 24. Dieser liefert das in der zweiten Zeile in Fig.2 dargestellte Ereignissignal 58. Das Ereignissignal 58 aktiviert die Zeitschaltmittel 26. Die Zeitschaltmittel 26 liefern an dem Ausgang 28 das in der dritten Zeile in Fig.2 dargestellte erste Abschaltsignal 60 und an dem Ausgang 30 das in der vierten Zeile in Fig.2 dargestellte zweite Abschaltsignal 62. Nach Neuinitialisierung des Digitalrechners 36 liefert dieser das in der fünften Zeile von Fig.2 dargestellte Rücksetzsignal 64 auf den Eingang 52 des Ereignisspeichers 24. Damit wird das Ereignissignal 58 zurückgesetzt.

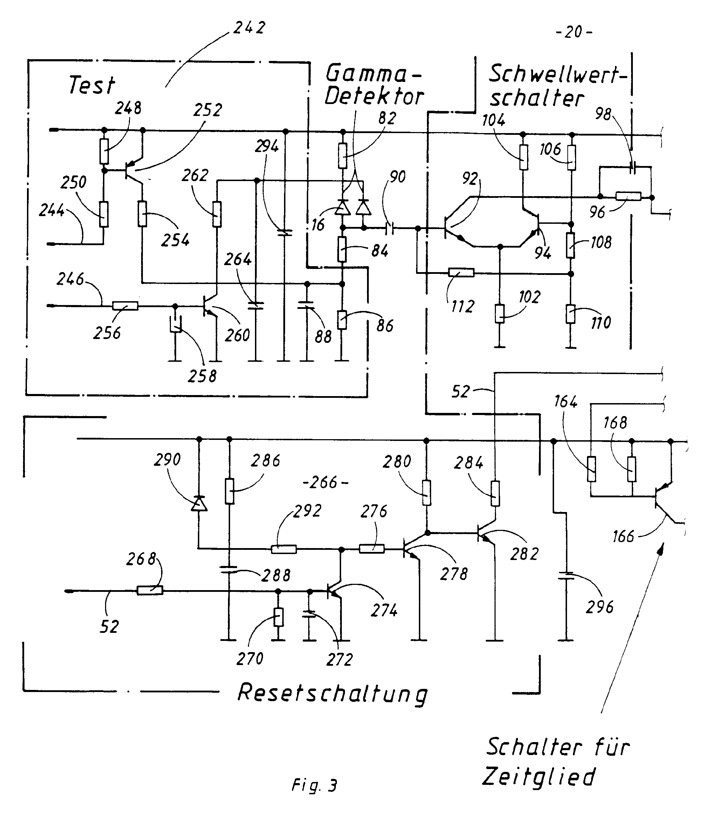

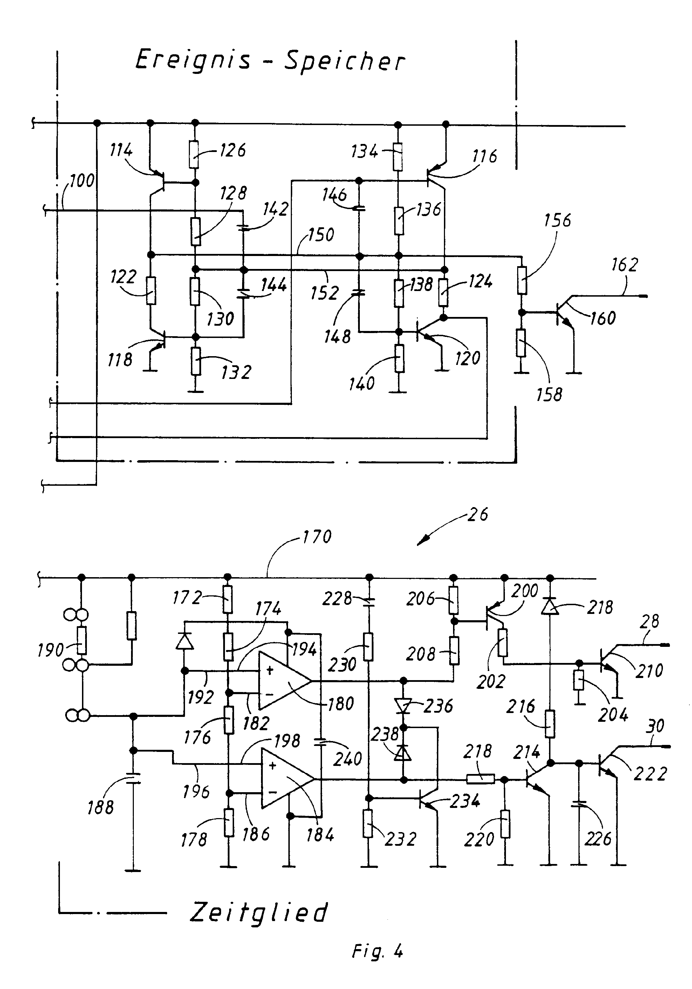

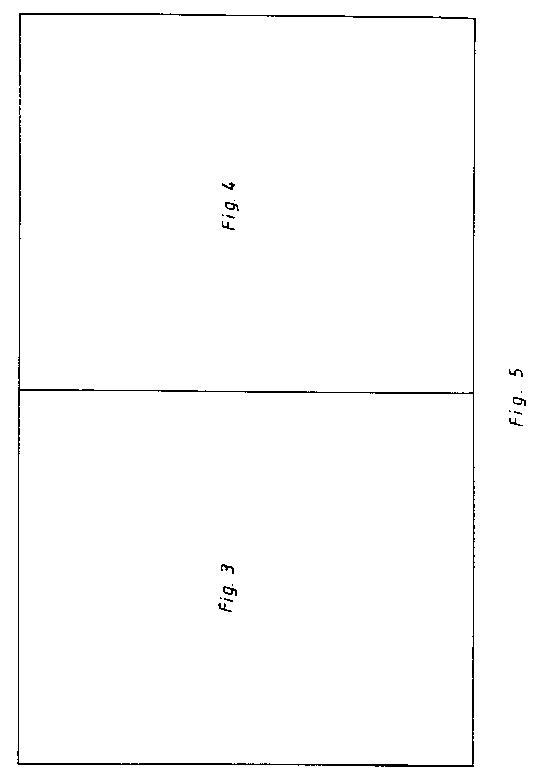

Fig.3 zeigt die Anwendung des Sensors 10 in einer Schutzvorrichtung für ein aus mehreren getrennten Geräten 66, 68, 70 bestehendes Elektroniksystem. Der Aufbau des Sensors 10 ist der gleiche wie in Fig.1. Entsprechende Teile sind mit den gleichen Bezugszeichen versehen wie dort.

Das erste Abschaltsignal am Ausgang 28 der Zeitschaltmittel 26 steuert ein Abschaltelement 72. Das Abschaltelement 72 ist hier in seiner Funktion als Relais 74 symbolisiert. Das Abschaltelement 72 schaltet über eine zentrale Abschalteinheit 76 die an einer Klemme 78 liegende Stromversorgung für alle elektronischen Geräte 66, 68 und 70 gleichzeitig ab. Durch die Rückflanke des Abschaltsignals wird über Eingang 52 der Ereignisspeicher 24 zurückgesetzt.

Mit 80 ist eine Stromversorgung für den Sensor bezeichnet. Die Stromversorgung liefert eine Versorgungsspannung von 5 Volt.

Alle Signalausgänge in der beschriebenen Schutzvorrichtung sind mit offenem Kollektor ausgeführt. Dadurch senken sie nur im aktivierten Zustand Strom.

In Fig.3 und 4 ist der Aufbau der Funktionsblöcke von Fig.1 im einzelnen dargestellt.

Die Kathode des Detektors 16 liegt über einen Widerstand 82 an der Versorgungsspannung von 5 Volt. Die Anode des Detektors 16 ist über einen Widerstand 84 und die Paralllelschaltung eines Widerstandes 86 und eines Kondensators 88 mit Masse verbunden. Der Detektor ist hier von zwei parallelgeschalteten PIN-Dioden gebildet. Der Widerstand 84 dient der Festlegung des Schwellwertes. Zwischen dem Detektor 16 (Dioden 16A und 16B) und dem Widerstand 84 wird über einen Kondensator 90 das dynamische Ausgangssignal des Detektors 16 abgegriffen.

Das Ausgangssignal des Detektors 16 ist auf einen Schwellwertschalter 20 in Form eines Differenzverstärkers geschaltet. Der Schwellwertschalter 20 enthält einen ersten NPN-Transistor 92 und einen zweiten NPN-Transistor 94. Der Kollektor des NPN-Transistors 92 ist über die Parallelschaltung eines Widerstandes 96 und eines Kondensators 98 mit einem Ausgang 100 des Schwellwertschalters 20 verbunden. Der Emitter des NPN-Transistors 92 liegt über einen Emitterwiderstand 102 an Masse. Der Kollektor des NPN-Transistors 94 ist über einen Kollektorwiderstand 104 mit derVersorgungsspannung verbunden. Der Emitter des NPN-Transistors 94 liegt zusammen mit dem Emitter des NPN-Transistors 92 an dem Emitterwiderstand 102. Zwischen der Versorgungsspannung und Masse liegt ein Spannungsteiler bestehend aus drei Widerständen 106, 108 und 110. Die Basis des NPN-Transistors 94 liegt an der Verbindung zwischen den Widerständen 106 und 108. Das über den Kondensator 90 aufgeschaltete Ausgangssignal des Detektors ist einmal auf die Basis des NPN-Transistors 92 und zum anderen über einen Widerstand 112 auf die Verbindung zwischen den Widerständen 108 und 110 des Spannungsteilers aufgeschaltet.

Der Ereignisspeicher ist eine Brückenschaltung mit zwei PNP-Transistoren 114 und 116 und zwei NPN-Transistoren 118 und 120. Der Emitter des PNP-Transistor 114 liegt an der Versorgungsspannung. Der Kollektor des PNP-Transistors 114 ist über einen Widerstand 122 mit dem Kollektor des NPN-Transistors 118 verbunden. Der Emitter des NPN-Transistors 118 liegt an Masse. In entsprechender Weise liegt der Emitter des PNP-Transistors 116 an der Versorgungs-Spannung. Der Kollektor des PNP-Transistors 116 ist über einen Widerstand 124 mit dem Kollektor des NPN-Transistors 120 verbunden. Der Emitter des NPN-Transistors 120 liegt an Masse. Zwischen der Versorgungsspannung und Masse liegt ein Spannungsteiler aus vier Widerständen 126, 128, 130 und 132. Zwischen der Versorgungsspannung und Masse liegt ein weiterer Spannungsteiler aus vier Widerständen 134, 136, 138 und 140. Die Verbindung zwischen den Widerständen 126 und 128 ist mit der Basis des PNP-Transistors 114 verbunden. Die Verbindung zwischen den Widerständen 130 und 132 ist mit der Basis des NPN-Transistors 118 verbunden. Die Verbindung zwischen den Widerständen 134 und 136 ist mit der Basis des Transistors 116 verbunden.

Die Verbindung zwischen den Widerständen 138 und 140 ist mit der Basis des NPN-Transistors 120 verbunden. Parallel zu dem Widerstand 128 ist ein Kondensator 142 geschaltet. Parallel zu dem Widerstand 130 ist ein Kondensator 144 geschaltet. Parallel zu dem Widerstand 136 ist ein Kondensator 146 geschaltet. Parallel zu dem Widerstand 138 ist ein Kondensator 148 geschaltet. Der Kollektor des PNP-Transistors 114 ist über eine Leitung 150 mit der Verbindung zwischen den Widerständen 136 und 138 verbunden. Der Kollektor des PNP-Transistors 116 ist über eine Leitung 152 mit der Verbindung zwischen den Widerständen 128 und 130 verbunden. Der Ausgang 100 des Schwellwertschalters 20 ist auf die Basis des PNP-Transistors 114 geschaltet. Ein Eingang 52 (Fig.1) ist über eine Leitung 154 auf die Basis des PNP-Transistors 116 geschaltet.

Die Verbindung zwischen den Widerständen 136 und 138 und der damit über Leitung 150 verbundene Kollektor des PNP-Transistors 114 sind mit einem Spannungsteiler mit den zwei Widerständen 156 und 158 verbunden. Der Widerstand 158 ist mit Masse verbunden. Die Basis eines NPN-Transistors 160 liegt an der Verbindung zwischen den Widerständen 156 und 158. Der Kollektor des NPN-Transistors 160 liegt an einem Ausgang 162, der bei Setzen des Ereignisspeichers 24 ein nukleares Ereignis signalisiert.

Der Kollektor des NPN-Transistors 120 ist über einen Widerstand 164 mit der Basis eines PNP-Transistors 166 verbunden. Die Basis des PNP-Transistors 166 ist weiterhin über einen Widerstand 168 mit der Versorgungsspannung verbunden. Der Emitter des PNP-Transistors 166 liegt an der Versorgungsspannung. Der Kollektor des PNP-Transistors ist mit der Stromversorgungsleitung 170 für die Zeitschaltmittel 26 verbunden. Der PNP-Transistor 166 bildet so einen Schalter, über welchen die Zeitschaltmittel an die Versorgungsspannung anlegbar sind.

Das Zeitglied 26 enthält einen Spannungsteiler aus vier Widerständen 172, 174, 176 und 178 zwischen der Stromversorgungsleitung 170 und Masse. Ein erster Komparator 180 in Form eines Operationsverstärkers liegt mit seinem invertierenden Referenzspannungseingang 182 an der Verbindung zwischen den Widerständen 174 und 176. Der Komparator 180 hat daher eine relativ hohe Schaltschwelle. Ein zweiter Komparator 184 in Form eines Operationsverstärkers liegt mit seinem invertierenden Referenzeingang 186 an der Verbindung zwischen den Widerständen 176 und 178. Der Komparator 184 hat daher eine relativ niedrige Schaltschwelle. Das Zeitglied 26 enthält einen Rampengenerator in Form eines Kondensators 188, der über einen einstellbaren Widerstand 190 aufgeladen wird. Zu diesem Zweck liegt die Reihenschaltung des Widerstandes 190 und des Kondensators 188 zwischen der Stromversorgungsleitung 170 und Masse. Die Verbindung zwischen dem Widerstand 190 und dem Kondensator 188 ist einmal über Leitung 192 mit dem zweiten, nicht-invertierenden Eingang 194 des ersten Komparators 180 und zum anderen über Leitung 196 mit dem zweiten, nicht-invertierenden Eingang 198 des zweiten Komparators 184 verbunden.

Ein PNP-Transistor 200 ist mit seinem Emitter mit der Stromversorgungsleitung 170 verbunden. Der Kollektor des PNP-Transistors 200 ist über die Reihenschaltung zweier Widerstände 202 und 204 mit Masse verbunden. Die Reihenschaltung zweier Widerstände 206 und 208 liegt zwischen der Stromversorgungsleitung 170 und dem Ausgang des Komparators 180. Die Basis des PNP-Transistors 200 liegt an der Verbindung zwischen den Widerständen 206 und 208.

Ein NPN-Transistor 210 liegt mit seinem Kollektor an einem Ausgang 28, durch den eine Abschaltung der Versorgungsspannung von dem zu schützenden Elektroniksystem auslösbar ist. Der Emitter des NPN-Transistors 210 liegt an Masse. Die Basis des NPN-Transistors 210 liegt an der Verbindung zwischen den Widerständen 202 und 204.

Der Kollektor eines NPN-Transistors 214 ist über einen Widerstand 216 und eine Zener-Diode 218 mit der Stromversorgungsleitung 170 verbunden. Der Emitter des NPN-Transistors 214 liegt an Masse. Die Reihenschaltung zweier Widerstände 218 und 220 liegt zwischen dem Ausgang des Komparators 184 und Masse. Die Basis des NPN-Transistors 214 liegt an der Verbindung zwischen den Widerständen 218 und 220. Ein NPN-Transistor 222 liegt mit seinem Kollektor an einem Ausgang 30, über den ein Kurzschließen von energiespeichernden Kondensatoren in dem Elektroniksystem einleitbar ist. Der Emitter des NPN-Transistors 222 liegt an Masse. Die Basis des NPN-Transistors ist mit dem Kollektor des NPN-Transistors 214 verbunden. Außerdem ist ein Kondensator 226 zwischen die Basis des NPN-Transistors 222 und Masse geschaltet.

Zwischen der Stromversorgungsleitung 170 und Masse liegt die Reihenschaltung eines Kondensators 228, eines Widerstandes 230 und eines Widerstandes 232. Der Kollektor eines NPN-Transistors 234 ist über je eine Diode 236 bzw. 238 mit den Ausgängen der Komparatoren 180 bzw. 184 verbunden. Der Emitter des NPN-Transistors 234 liegt an Masse. Die Basis des NPN-Transistors 234 liegt an der Verbindung zwischen den Widerständen 230 und 232.

Die beiden Komparatoren 180,184 sind Teile eines einen "Doppelkomparator" bildenden Bauteils, dessen Versorgungsspannung über einen Versorgungsspannungseingang 181 für beide Komparatoren 180 und 184 zugeführt wird. Auch ein Masseanschluß 183 ist für beide Komparatoren gemeinsam. Ein Kondensator 240 liegt zwischen dem Versorgungsspannungseingang 181 und Masse. Der Kondensator 240 wird von der an der Stromversorgungsleitung 170 anliegenden Spannung über den Widerstand 172 aufgeladen. Die Komparatoren 180 und 184 werden dadurch nicht sofort nach dem Anlegen der Versorgungsspannung an die Stromversorgungsleitung 170 wirksam. Es tritt eine Verzögerung ein, die durch das RC-Glied aus Widerstand 172 und Kondensator 240 bedingt ist. Das stellt sicher, daß beim Aktivieren des Zeitgliedes noch während des Auftretens von Gammastrahlung ein Latchup in dem Zeitglied stattfinden kann.

Die Schutzvorrichtung enthält eine Schaltung 242 zum Testen des Detektors. Zu diesem Zweck können Prüfsignale auf Eingänge 244 und 246 aufgeschaltet werden.

Eine Reihenschaltung von zwei Widerständen 248 und 250 liegt zwischen der Versorgungsspannung und dem Eingang 244. Der Emitter eines PNP-Transistors 252 liegt an der Versorgungsspannung. Der Kollektor des PNP-Transistors 252 ist über einen Widerstand 254 mit der Verbindung zwischen dem Widerstand 84 und der Parallelschaltung des Widerstandes 86 und des Kondensators 88 verbunden. Die Basis des PNP-Transistors 252 liegt an der Verbindung zwischen den Widerständen 248 und 250.

Eine Reihenschaltung von Widerständen 256 und 258 liegt zwischen dem Eingang 246 und Masse. Der Kollektor eines NPN-Transistors 260 ist über einen Widerstand 262 mit den Kathoden der den Detektor bildenden PIN-Dioden 16A und 16B verbunden. Der Emitter des NPN-Transistors 260 liegt an Masse. Die Basis des NPN-Transistors 260 liegt an der Verbindung zwischen den Widerständen 256 und 258. Ein Kondensator 264 liegt parallel zu dem Widerstand und der Emitter-Kollektor-Strecke des NPN-Transistors 260.

Mit 266 ist eine Rücksetzschaltung bezeichnet. Die Rücksetzschaltung 266 erhält ein Rücksetzsignal von dem Digitalrechner an einem Eingang 52 (Fig.1). Eine Reihenschaltung eines Widerstandes 268 und der Parallelschaltung eines Widerstandes 270 und eines Kondensators 272 liegt zwischen dem Eingang 52 und Masse. Die Verbindung zwischen dem Widerstand 268 und dem Widerstand 270 bzw. dem Kondensator 272 ist mit der Basis eines NPN-Transistors 274 verbunden. Der Emitter des NPN-Transistors 274 liegt an Masse. Der Kollektor des NPN-Transistors 274 ist über einen Widerstand 276 mit der Basis eines weiteren NPN-Transistors 278 verbunden. Der Kollektor des NPN-Transistors 278 liegt über einen Widerstand 280 an der Versorgungsspannung. Der Emitter des NPN-Transistors liegt an Masse. Der Kollektor des NPN-Transistors 278 ist weiterhin direkt mit der Basis eines NPN-Transistors 282 verbunden. Der Emitter des NPN-Transistors 282 liegt an Masse. Der Kollektor des NPN-Transistors 282 ist über einen Widerstand 284 mit dem Eingang 52 des Ereignisspeichers 24 verbunden, der über Leitung 154 zu der Basis des PNP-Transistors 116 geführt ist und über den ein Rücksetzen des Ereignisspeichers 24 erfolgen kann.

Ein Widerstand 286 und ein Kondensator 288 liegen zwischen der Versorgungsspannung und Masse. Eine Diode 290 ist in Sperrichtung für die Versorgungsspannung parallel zu dem Widerstand 286 geschaltet. Die Verbindung zwischen dem Widerstand 286 und dem Kondensator 288 ist über einen Widerstand 292 und den Widerstand 276 mit der Basis des NPN-Transistors 278 verbunden.

Kondensatoren 294 und 296 liegen zwischen Versorgungsspannung und Masse.

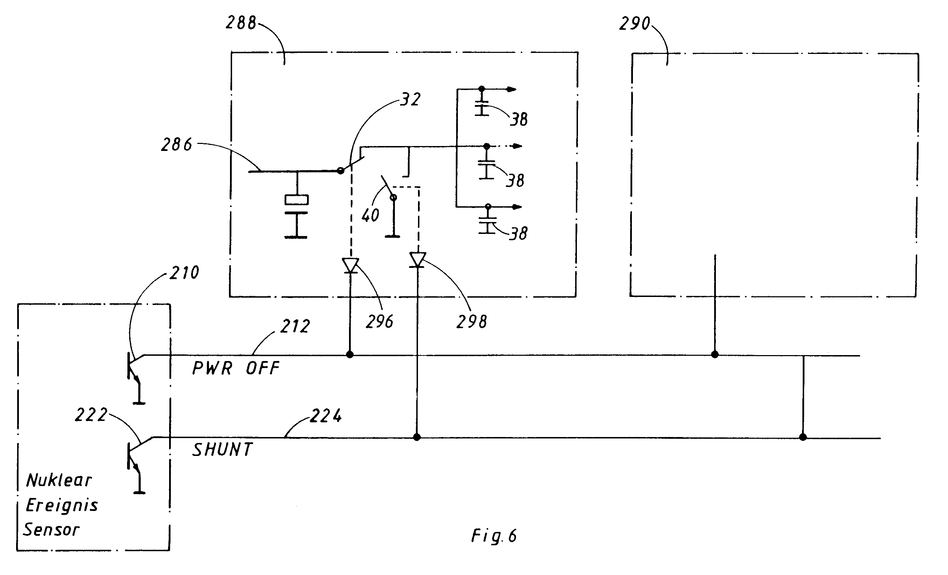

In Fig.6 ist die Abschaltung der Elektroniksysteme bei gleichzeitiger Entladung von energiespeichernden Kondensatoren dargestellt. Durch die Abschaltung und die Entladung energiespeichernder Kondensatoren werden Latchup-Effekte gelöst, die durch das nukleare Ereignis hervorgerufen werden. Andererseits soll nach dem nuklearen Ereignis und der dadurch hervorgerufenen Gammastrahlung und nach Abklingen der Ströme möglichst schnell eine Wiedereinschaltung erfolgen, damit die elektronischen Systeme wieder funktionsfähig werden. Die Versorgungsspannung, die an einer Stromversorgungsleitung 286 des jeweiligen Moduls des Elektroniksystems anliegt, wird durch Kondensatoren 288 großer Kapazität geglättet und entstört. Es erfordert einige Zeit, bis diese Kondensatoren 288 entladen und nach dem Wiedereinschalten wieder aufgeladen sind. Aus diesem Grunde ist der Schalter 32, über welchen die Abschaltung des jeweiligen Moduls oder des Elektroniksystems erfolgt, hinter diesen Kondensatoren 288 angeordnet. Auch der Schalter 40 zum Entladen der energiespeichernden Kondensatoren 38 liegt hinter dem jeweiligen Kondensator 288. Die Kondensatoren 288 werden daher bei Auftreten eines nuklearen Ereignisses nicht entladen und brauchen daher bei der anschließenden Wiedereinschaltung nicht wieder aufgeladen zu werden. Entladen werden nur die in der Schaltung des Moduls selbst enthaltenen Kondensatoren 38, wie in Fig.6 schematisch dargestellt ist. Auf diese Weise kann sowohl die Abschaltung als auch die Wiedereinschaltung schnell erfolgen. Die Schalter 32 und 40 sind natürlich in der Praxis elektronische Schalter. Die Schalter für die verschiedenen Module 290 werden parallel über Ausgangsleitungen 212 und 224 des Sensors 12 über Dioden 296, 298 angesteuert.

Die beschriebene Schaltung arbeitet wie folgt:

Der Ereignisspeicher 24 ist normalerweise in einem Zustand, in welchem der PNP-Transistor 114 und der NPN-Transistor 120 nichtleitend sind, während der PNP-Transistor 116 und der NPN-Transistor leitend sind. Das Ausgangssignal an den Widerständen 156 und 158 ist daher niedrig. Der NPN-Transistor 160 ist nichtleitend. Der Ereignisspeicher 24 wird beim Einschalten der Versorgungsspannung durch den Ladestromimpuls im Widerstand 286 über die NPN-Transistoren 278 und 282 und die Leitung 154 in diesen Zustand gesetzt.

Beim Ansprechen des Detektors 16, wenn also die beiden parallelen PIN-Dioden leitend werden, wird bei Überschreiten eines durch den Widerstand 84 bestimmbaren Schwellwertes über den Schwellwertschalter 20, einen Differenzverstärker, ein Impuls auf den PNP-Transistor 114 gegeben. Dadurch kippt der Ereignisspeicher 24 in den anderen Schaltzustand: Der PNP-Transistor 114 und der NPN-Transistor 120 werden leitend, der PNP-Transistor 116 und der NPN-Transistor 118 werden nichtleitend. Das Ausgangssignal an den Widerständen 156 und 158 wird hoch. Der NPN-Transistor 160 wird leitend.

Wenn der NPN-Transistor 120 leitend wird, dann geht die Basis des Transistors 166 auf Massepotential. Der NPN-Transistor 166 wird leitend. Dadurch wird Versorgungsspannung auf die Stromversorgungsleitung 170 gegeben. Die Zeitschaltmittel 26 liegen daher vor dem Setzen des Ereignisspeichers 24 nicht an Spannung. Eine Fehlfunktion der Zeitschaltmittel 26 z.B. durch die Gammastrahlung und dadurch bedingte Photoströme wird ausgeschlossen.

Mit Anschalten der Stromversorgungsleitung 170 an die Versorgungsspannung wird der PNP-Transistor 200 leitend. Dadurch wird der NPN-Transistor 210 leitend, so daß das erste Abschaltsignal 60 (Fig.2) an dem Ausgang 28 erzeugt wird.

Über die Zener-Diode 218 und den Widerstand 216 wird der Kondensator 226 aufgeladen. Wenn der Kondensator 226 auf eine vorgegebene Spannung aufgeladen wurde, wird der NPN-Transistor 222 leitend. An dem Ausgang 30 tritt dann das zweite Abschaltsignal 62 (Fig.2) auf. Das zweite Abschaltsignal 62 ist durch den Kondensator 226 gegenüber dem ersten Abschaltsignal 60 verzögert.

Die Ausgänge der Komparatoren 180 und 184 sind zunächst niedrig. In diesem Zustand werden sie auch für einige Zeit gehalten durch den NPN-Transistor 234, der zunächst leitend ist. Der Transistor 234 wird nichtleitend, wenn der Kondensator 228 hinreichend weit aufgeladen ist.

Über den Widerstand 190 wird der Kondensator 188 aufgeladen. An dem Kondensator 188 ergibt sich daher eine rampenartig ansteigende Spannung. Die Anstiegsrate dieser Spannung kann durch den Widerstand 190 bestimmt und ggf. eingestellt werden. Durch den Anstieg dieser Spannung kippt zunächst der Komparator 184 und dann der Komparator 180. Die Zeit bis zum Kippen der Komparatoren 184 und 180 kann durch einen einzigen Widerstand 190 vorgegeben werden. Es ist aber stets sichergestellt, daß der Komparator 184 vor demm Komparator 180 kippt.

Wenn der Komparator 184 kippt, der Ausgang also in den Zustand "hoch" übergeht, dann wird der NPN-Transistor 214 leitend. Kondensator 226 wird entladen. Transistor 222 wird nichtleitend. Das zweite Abschaltsignal 62 geht wieder auf "hoch".

Wenn anschließend der Komparator 180 kippt, der Ausgang also auf "hoch" geht, dann wird der PNP-Transistor 200 gesperrt. Der NPN-Transistor 210 wird dadurch nichtleitend. Auch das erste Abschaltsignal 60 geht auf "hoch" zurück.

Durch Testsignale an den Eingängen 244 und 246, bei gleichzeitiger Beobachtung der Ausgänge des Sensors 10, können Fehler der PIN-Dioden 16A und 16B (Kurzschluß, Leitungsunterbrechung) festgestellt werden.

Dadurch, daß zwei parallele PIN-Dioden 16A und 16B vorhanden sind, kann mit einer einzigen relativ niedrigen Versorgungsspannung von beispielsweise 5 Volt gearbeitet werden, wie sie für die Elektroniksysteme benutzt wird. Die Parallelschaltung der beiden PIN-Dioden gewährleistet die erforderliche Empfindlichkeit zum Ansprechen des Sensors bei niedrig eingestellter Ansprechschwelle.

Die Schaltung ist so ausgelegt, daß Photoströme in den Transistoren, die durch Gammastrahlung hervorgerufen werden, sich möglichst im Sinne der Funktion der Schaltung auswirken, so daß die Schutzschaltung nicht selbst durch die Gammastrahlung gestört wird.

Der Ereignisspeicher 24 wird gesetzt dadurch, daß der PNP-Transistor 114 leitend gemacht wird. Ein Leitendwerden des NPN-Transistors 114 infolge von Gammastrahlung würde dieser Funktion nicht entgegenwirken, so daß der Ereignisspeicher 24 sicher in den gesetzten Zustand übergeht.

Die Zeitschaltmittel 26 werden erst an die Versorgungsspannung angelegt, wenn der Ereignisspeicher 24 sicher gesetzt ist. Es kann daher keine Störung der Zeitschaltmittel 24 durch die Gammastrahlung erfolgen. Die Ausgänge der Komparatoren werden für eine bestimmte Zeit auf null gehalten. Hierdurch wird eine eindeutige Funktion sichergestellt.

Die Ausgangssignale liegen an "offenen Kollektoren" von Transistoren an, die im aktivierten Zustand nichtleitend sind. Das sind die Transistoren 169, 210 und 222.

## Patentansprüche

1. Schutzvorrichtung zum Schutz von Elektroniksystemen gegen Gammastrahlung, enthaltend
(a) einen auf Gammastrahlung ansprechenden Detektor (16),
(b) einen Schwellwertschalter (20), der von dem Ausgangssignal des Detektors (16) beaufschlagt ist,
(c) einen Ereignisspeicher (24), der durch den Schwellwertschalter (20) gesetzt wird, wenn der Schwellwertschalter (20) anspricht, und
(d) Zeitschaltmittel (26) zum Aus- und Wiedereinschalten des Elektroniksystems (36; 66,68,70) nach einem Gammastrahlung hervorrufenden Ereignis, wobei der Ereignisspeicher (24) nach dem Wiedereinschalten des Elektroniksystems zurückgesetzt werden kann,
**dadurch** **gekennzeichnet,** **daß**
(e) die Zeitschaltmittel erst durch ein Ausgangssignal des Ereignisspeichers nach Setzen des Ereignisspeichers auslösbar sind.

2. Schutzvorrichtung nach Anspruch 1, **dadurch** **gekennzeichnet**, **daß** der Ereignisspeicher (24) eine bistabile Schaltung mit Transistoren (114,116,118,120) ist, die durch ein Signal an einem dieser Transistoren (114) in einen Setzzustand schaltbar ist, bei welchem dieser Transistor (114) leitend ist.

3. Schutzvorrichtung nach Anspruch 2, **dadurch** **gekennzeichnet, daß**
(a) die bistabile Schaltung eine Brückenschaltung ist, in deren beiden Zweigen jeweils ein PNP-Transistor (114;116) und ein NPN-Transistor (118;120) liegen, die sich gegenseitig so verriegeln, daß in dem Setzzustand der PNP-Transistor (114) des einen, ersten Zweiges und der NPN-Transistor (120) des anderen, zweiten Zweiges leitend und die beiden übrigen Transistoren (116,118) nichtleitend sind, während im nichtgesetzten Zustand der PNP-Transistor (116) des zweiten Zweiges und der NPN-Transistor (118) des ersten Zweiges leitend und die übrigen Transistoren (114,120) der Brückenschaltung nichtleitend sind, und
(b) der von dem Signal des Schwellwertschalters (20) beaufschlagte Transistor (114) einer der besagten PNP-Transistoren ist.

4. Schutzvorrichtung nach einem der Ansprüche 1 bis 3, **dadurch** **gekennzeichnet,** **daß** das Elektroniksystem einen gegen Gammastrahlung resistenten Arbeitsspeicher (44) enthält, der nach dem Wiedereinschalten und einer Neuinitialisierung des Elektroniksystems auf wichtige varaible Daten vor dem Strahlungsereignis zurückgreifen kann.

5. Schutzvorrichtung nach einem der Ansprüche 1 bis 4, **dadurch** **gekennzeichnet,** **daß** die Ansprechschwelle des Schwellwertschalters (20) einstellbar ist.

6. Schutzvorrichtung nach einem der Ansprüche 1 bis 5, **dadurch** **gekennzeichnet,** **daß** durch die Zeitschaltmittel (26) zwei Abschaltsignale (60,62) erzeugbar sind, die jedes über ein Zeitintervall anstehen, wobei das Zeitintervall des einen, ersten Abschaltsignals (60) stets vollständig das Zeitintervall des anderen, zweiten Abschaltsignals (60) umfaßt.

7. Schutzvorrichtung nach Anspruch 6, **dadurch** **gekennzeichnet, daß** die Zeitintervalle der Abschaltsignale (60,62) gemeinsam einstellbar sind, wobei die Lage des einen Zeitintervalls (62) innerhalb des anderen bei jeder Einstellung gewährleistet ist.

8. Schutzvorrichtung nach Anspruch 7, **dadurch** **gekennzeichnet, daß** die Zeitschaltmittel (26) durch ein Ausgangssignal des Ereignisspeichers (24) an eine Versorgungsspannung anlegbar sind.

9. Schutzvorrichtung nach Anspruch 8, **dadurch gekennzeichnet, daß**
(a) durch die Versorgungsspannung Transistormittel (200,210) ansteuerbar sind, die das erste Abschaltsignal (60) einleiten,
(b) durch die Versorgungsspannung ein zweiter Transistor (222) über ein Verzögerungsglied (218,216,226) ansteuerbar ist, wobei der zweite Transistor (222) das zweite Abschaltsignal (62) einleitet,
(c) die Versorgungsspannung weiterhin auf einen Rampengenerator (190,188) aufgeschaltet wird, durch den eine mit der Zeit ansteigende Spannung auf zwei Komparatoren (180,184) aufgeschaltet ist, von denen ein erster (184) bei einem relativ niedrigen und ein zweiter (180) bei einem relativ hohen Schwellwert der ansteigenden Spannung schaltet,
(d) der Ausgang des ersten Komparators (184) den zweiten Transistor (222) im Sinne einer Beendigung des zweiten Abschaltsignals (62) ansteuert,
(e) der Ausgang des zweiten Komparators (180) die ersten Transistormittel (200,210) im Sinne einer Beendigung des ersten Abschaltsignals (60) ansteuert und
(f) die Anstiegsrate der Spannung des Rampengenerators (190,188) durch ein einziges Stellglied (190) einstellbar ist.

10. Schutzvorrichtung nach Anspruch 9, **dadurch gekennzeichnet**, **daß** der Rampengenerator einen Kondensator (188) enthält, der über einen einstellbaren Widerstand (190) von der Versorgungsspannung aufladbar ist und an welchem die ansteigende Spannung abgegriffen wird.

11. Schutzvorrichtung nach Anspruch 9 oder 10, **dadurch gekennzeichnet, daß**
(a) ein PNP-Transistor (200) mit einem im Kollektorkreis liegenden Spannungsteiler (202,204) an der Versorgungsspannung liegt,
(b) ein als Schalter wirkender erster NPN-Transistor (210) zur Erzeugung des ersten Abschaltsignals (60) von einer an dem Spannungsteiler (202,204) abgegriffenen Spannung ansteuerbar ist,
(c) der PNP-Transistor (200) mit seiner Basis an einem Spannungsteiler (206,208) liegt, der einerseits mit der Versorgungsspannung und andererseits mit dem Ausgang des zweiten Komparators (180) verbunden ist,
(d) ein zweiter NPN-Transistor (214) mit einem Kollektorwiderstand an der Versorgungsspannung liegt,
(e) ein Kondensator (226) parallel zu der Emitter-Kollektor-Strecke des zweiten NPN-Transistors (214) angeordnet ist,
(f) der zweite NPN-Transistor (214) mit seiner Basis an einem Spannungsteiler (218,220) liegt, der einerseits mit dem Ausgang des ersten Komparators (184) und andererseits mit Masse verbunden ist, und
(g) ein als Schalter wirkender dritter NPN-Transistor (222) zur Erzeugung des zweiten Abschaltsignals mit seiner Basis mit dem Kollektor des zweiten NPN-Transistors (214) verbunden ist.

12. Schutzvorrichtung nach Anspruch 11, **dadurch** **gekennzeichnet, daß** der Kollektorwiderstand (216) des zweiten NPN-Transistors (214) über eine Zener-Diode (218) mit der Versorgungsspannung verbunden ist.

13. Schutzvorrichtung nach einem der Ansprüche 9 bis 12, **dadurch** **gekennzeichnet,** **daß** Versorgungsspannungs-Eingänge der Komparatoren (180,184) über ein RC-Glied (172,240) an der Versorgungsspannung anliegen.

14. Schutzvorrichtung nach einem der Ansprüche 9 bis 13, **dadurch** **gekennzeichnet,** **daß** die Ausgänge der Komparatoren (180,182) durch einen elektronischen Schalter (234) für eine vorgegebene kurze Zeit nach Anlegen der Versorgungsspannung an das Zeitglied (26) auf Massepotential gehalten werden.

15. Schutzvorrichtung nach Anspruch 14, **dadurch** **gekennzeichnet, daß**
(a) zwischen der Versorgungsspannung und Masse eine Reihenschaltung eines versorgungsspannungsseitig angeordneten Kondensators (228) und zweier ohmscher Widerstände (230,232) liegt,
(b) die Verbindung zwischen den beiden Widerständen (230,232) mit der Basis eines NPN-Transistors (234) verbunden ist und
(c) der Emitter des NPN-Transistors (234) mit Masse und der Kollektor des NPN-Transistors (234) über je eine Diode (236,238) mit den Ausgängen der Komparatoren (180,184) verbunden ist.

16. Schutzvorrichtung nach einem der Ansprüche 1 bis 15, **dadurch** **gekennzeichnet,** **daß** zum Schutz eines Digitalrechners (36), der von einer Stromversorgung gespeist wird und welcher energiespeichernde Kondensatoren enthält, von dem Abschaltsignal (60) mit dem längeren Zeitintervall die Stromversorgung über einen ersten elektronischen Schalter (32) abschaltbar ist und von dem Abschaltsignal (62) mit dem kürzeren Zeitintervall eine Entladung der Kondensatoren (38) über einen zweiten elektronischen Schalter (40) einleitbar ist.

17. Schutzvorrichtung nach einem der Ansprüche 1 bis 16, **dadurch** **gekennzeichnet,** **daß** der Detektor (16) des Sensors (10) zur Prüfung auf Kurzschluß wie auf Unterbrechung mit elektrischen Stimulationssignalen beaufschlagbar ist.

18. Schutzvorrichtung nach einem der Ansprüche 1 bis 17, **dadurch** **gekennzeichnet,** **daß** der Detektor (16) des Sensors (10) zur Überprüfung mit einem Lichtblitz beaufschlagbar ist.

19. Schutzvorrichtung nach einem der Ansprüche 1 bis 19, **dadurch** **gekennzeichnet,** **daß** der Sensor (10) aus latchupfreien, diskreten Komponenten aufgebaut ist.

20. Schutzvorrichtung nach Anspruch 19, **dadurch** **gekennzeichnet, daß** der Sensor (10) als metallisch gekapselte Hybrid-Dickschichtschaltung aufgebaut ist.

21. Schutzvorrichtung nach Anspruch 20, **dadurch** **gekennzeichnet, daß** die Kapselung ein Fenster (14) aufweist, durch welches hindurch der Detektor (16) zu Prüfzwecken mit einem Lichtblitz beaufschlagbar ist.

22. Schutzvorrichtung nach einem der Ansprüche 1 bis 21, **dadurch** **gekennzeichnet,** **daß** der Sensor (10) mit nur einer Versorgungsspannung betrieben wird.

23. Schutzvorrichtung nach Anspruch 22, **dadurch** **gekennzeichnet, daß** der Sensor (10) mehrere parallelgeschaltete Detektoren (16A,16B) aufweist.

24. Schutzvorrichtung nach einem der Ansprüche 1 bis 23, **dadurch** **gekennzeichnet,** **daß**
(a) ein Versorgungsspannungseingang (286) mit einem Kondensator relativ großer Kapazität gegen Masse beschaltet ist,
(b) Module (288,290) des Elektroniksystems mit energiespeichernden Kondensatoren (38) relativ geringer Kapazität beschaltet sind,
(c) der erste elektronische Schalter (32) zur Abschaltung der Versorgungsspannung modulseitig von dem Kondensator relativ großer Kapazität angeordnet ist und
(d) der zweite elektronische Schalter (40) modulseitig von dem ersten elektronischen Schalter (32) so angeordnet ist, daß über ihn nach Öffnen des ersten elektronischen Schalters (32) nur die Kondensatoren (38) relativ kleiner Kapazität entladbar sind.

25. Schutzvorrichtung nach einem der Ansprüche 1 bis 24, **dadurch** **gekennzeichnet,** **daß** alle Ausgangssignale an "offenen" Kollektoren von Transistoren anliegen, die im aktivierten Zustand nichtleitend sind.

## Claims

1. Protecting device for protecting electronic systems against gamma radiation, comprising
(a) a detector (16) responding to gamma radiation
(b) a threshold value switch (20) to which the output signal of the detector (16) is applied,
(c) an event memory (24) set by the threshold value switch (20) when the threshold value switch (20) is responding, and
(d) timer means (26) for switching on an off the electronic system (36;66,68,70) after an event causing a gamma radiation, the event store (24) being arranged to be set back after the electronic system has been switched on again,
**characterized in that**
(e) the timer means are arranged to be released only by an output signal of the event memory after the setting of the event memory.

2. Protecting device as claimed in claim 1, **characterized** **in** **that** the event memory (24) is a bistable circuit having transistors (114,116,118,120), which circuit is arranged to be switched into a set state by a signal at one of these transistors (114), in which set state this transistor (114) is conductive.

3. Protecting device as claimed in claim 2, **characterized** **in** **that**
(a) the bistable switch is a bridge circuit in the two arms of which is located a PNP-transistor (114;116) and a NPN-transistor (118;120), respectively, which interlock each other such that in the set state, the PNP-transistor (114) of the first arm and the NPN-transistor (120) of the other second arm are conductive and the two other transistors (116,118) are non-conductive, while in the non-set state, the PNP-transistor (116) of the second arm and the NPN-transistor (118) of the first arm are conductive and the other transistors (114,120) of the bridge circuit are non-conductive, and
(b) the transistor (114) to which the signal of the threshold value switch (20) is applied, is one of said PNP-transistors.

4. Protecting device as claimed in anyone of the claims 1 to 3, **characterized** **in** **that** the electronic system comprises an operating memory (44) resistive to gamma radiation and arranged to fall back upon important variable dates before the radiation event after the electronic system has been switched on again an newly initialized.

5. Protecting device as claimed in one of claims 1 to 4, **characterized** **in** **that** the threshold value switch (20) permits adjustment of the response threshold thereof.

6. Protecting device as claimed in one of claims 1 to 5, **characterized** **in** **that** the timer means (26) are arranged to produce two switch-off signals (60,62) each one appearing over a time interval, the time interval of the first switch-off signal (60) being always completly included in the time interval of the other, second switch-off signal (60).

7. Protecting device as claimed in claim 6, **characterized** **in** **that** the time intervals of the switch-off signals (60,62) are adjustable together, the position of one time interval (62) within the other one being ensured with each adjustment.

8. Protecting device as claimed in claim 7, **characterized** **in** **that** the timer means (26) are arranged to be applied to a supply voltage by an output signal of the event memory (24).

9. Protecting device as claimed in claim 8, **characterized** **in** **that**
(a) transistor means (200,210) are arranged to be controlled by the supply voltage, which transistor means initiate the first switch-off signal (60),
(b) a second transistor (222) is arranged to be controlled by the supply voltage through a time-lag element (218,216,226), the second transistor (222) initiating the second switch-off signal (62),
(c) the supply voltage is, furthermore, applied to a ramp generator (190,188) by which a voltage increasing with time is applied to two comparators (180,184), a first one of which (184) is changed over at a relatively low threshold value, and a second (180) one is changed over at a relatively high threshold value of the increasing voltage,
(d) the ouput of the first comparator (184) controls the second transistor (222) to terminate the second switch-off signal (62),
(e) the output of the second comparator (180) controls the first transistor means (200,210) to terminate the first switch-off signal (60),
(f) a single setting element (190) is arranged to adjust the rate of increase of the voltage of the ramp generator (190,188).

10. Protecting device as claimed in claim 9, **characterized** **in** **that** the ramp generator comprises a capacitor (188) which is arranged to be charged through an ajustable resistance (190) by the supply voltage, and from which the increasing voltage is picked-off.

11. Protecting device as claimed in claim 9 or 10, **characterized** **in** **that**
(a) a PNP-transistor (200) is connected to the supply voltage through a voltage divider (2022,204) located in the collector circuit,
(b) a first NPN-transistor (210) operative as a switch is arranged to be controlled by a voltage picked-off at the voltage divider (202,204) to generate a first switch-off signal (60),
(c) the PNP-transistor (200) has its base connected to a voltage divider (206,208) which, on one hand, is connected to the supply voltage, and, on the other hand, to the ouput of the second comparator (180),
(d) a second NPN-transistor (214) has a collector resistance connected to the supply voltage,
(e) a capacitor (226) is arranged parallel to the emitter-collector junction of the second NPN- transistor (214),
(f) the second NPN-transistor (214) has its base connected to a voltage divider (218,220) which, on one hand, is connected to the outupt of the first comparator (184) and, on the other hand, to grund, and
(g) a third NPN-transistor (222) operative as a switch is connected with its base to the collector of the second NPN-transistor (214) to generate the second switch-off signal.

12. Protecting device as claimed in claim 11, **characterized** **in** **that** the collector resistor (216) of the second NPN-transistor (214) is connected through a Zener diode (218) to the supply voltage.

13. Protecting device as claimed in one of claims 9 to 12, **characterized** **in** **that** the supply voltage inputs of the comparators (180,184) are connected to the supply voltage through an RC-network (172,240).

14. Protecting device as claimed in one of claims 9 to 13, **characterized** **in** **that** the outputs of the comparators (180,182) are held on ground potential by an electronic switch (234) for a predetermined short time, after the supply voltage has been applied to the timer (26).

15. Protecting device as claimed in claim 14, **characterized** **in** **that**
(a) a series connection of a capacitor (228) arranged on the supply voltage side and of two ohmic resistors (230,232) is located between the supply voltage and ground,
(b) the connection between the two resistors (230,232) is connected to the base of a NPN-transistor (234), and
(c) the emitter of the NPN-transistor (234) is connected to ground and the collector of the NPN-transistor (234) is connected, through one diode each (236,238), with the outputs of the comparators (180,184).

16. Protecting device as claimed in anyone of the claims 1 to 15, **characterized in that** for protecting a digital computer (36) energized by a power supply and comprising energy storing capacitors, the switch-off signal (60) having the longer time interval serves to switch off the power supply through a first electronic switch (32), and the switch-off signal (62) having the shorter time interval serves to initiate the discharge of the capacitors (38) through a second electronic switch (40).

17. Protecting device as claimed in anyone of the claims 1 to 16, characterized in that electrical stimulation signals are applied to the detector (16) of the sensor (10) to test it for short circuit as well as breaking.

18. Protecing device as claimed in one of claims 1 to 17, **characterized** **in** **that** a flash is applied to the detector (16) of the sensor (10) for testing.

19. Protecting device as claimed in anyone of the claims 1 to 19, characterized in that the sensor (10) is composed of discrete components without latchup.

20. Protecting device as claimed in claim 19, **characterized** **in** **that** the sensor (10) is constructed as hybrid thick-film circuit housed in a metal casing.

21. Protecting device as claimed in claim 20, **characterized** **in** **that** the casing has a window (14) through which a flash can be applied to the detector (16) for test purpose.

22. Protecting device as claimed in one of claims 1 to 21, **characterized** **in** **that** the sensor (10) is operated with one supply voltage only.

23. Protecting device as claimed in claim 22, **characterized** **in** **that** the sensor (10) has several detectors (16A,16B) connected in parallel.

24. Protecting device as claimed in one of claims 1 to 23, **characterized** **in** **that**
(a) a supply voltage input (286) is connected to ground through a capacitor of relatively large capacitance,
(b) energy storing capacitors (38) of relatively small capacitance are connected to modules (288,290) of the elcetronic system,
(c) the first electronic switch (32) for switching off the supply voltage, is arranged on the module side of the capacitor of relatively large capacitance, and
(d) the second electronic switch (40) is arranged on the module side of the first electronic switch (32) such that, therethrough, only the capacitors (38) of relatively small capacitance are discharged after the first electronic switch (32) has been opened.

25. Protecting device as claimed in anyone of the claims 1 to 24, **characterized** **in** **that** all output signals are applied to "open" collectors of the transistors which, in active their states, are non-conductive.

## Revendications

1. Dispositif de protection destiné à protéger des systèmes électroniques contre la radiation gamma, comprenant
(a) un détecteur (16) répondant à la radiation gamma,
(b) un interrupteur de valeur de seuil (20) auquel est appliqué le signal de sortie du détecteur (16),
(c) un réservoir d'énergie (24) ajusté par l'interrupteur de valeur de seuil (20) lorsque l'interrupteur de valeur de seuil (20) répond, et
(d) des moyens de minuterie (26) destinés à mettre le système électronique (36; 66,68,70) hors et de nouveau en circuit après un évenement provoquant une radiation gamma, le réservoir d'énergie (24) étant susceptible d'être remis après la remise en circuit du système électronique,
**caractérisé** **par** **le** **fait** **que**
(e) les moyens de minuterie ne peuvent être déclenchés que par un signal de sortie de la mémoire d'évenement après l'ajustement de la mémoire d'évenement.

2. Dispositif de protection selon la revendication 1, **caractérisé** **par** **le** **fait** **que** la mémoire d'évenement (24) est un circuit bistable muni de transistors (114,116,118,120), qui est susceptible d'être commuté par un signal à l'un de ces transistors (114) dans un état d'ajustement, dans lequel ce transistor (114) est conductif.

3. Dispositif de protection selon la revendication 2, **caractérisé** **par** **le** **fait** **que**
(a) le circuit bistable est un circuit à pont, dans les deux branches de celui-ci étant disposé un transistor PNP (114;116) et un transistor NPN (118;120) à la fois, qui se verrouillent réciproquement de sorte que, dans l'état d'ajustement, le transistor PNP (114) de l'une des branches -la première-, et le transistor NPN (120) de l'autre branche -la seconde- sont conductifs, et les autres transistors (116,118) sont non-conductifs, tandis que dans l'état non-ajusté, le transistor PNP (116) de la seconde branche et le transistor NPN (118) de la première branche sont conductifs et les autres transistors (114,120) du circuit à pont sont non-conductifs, et
(b) le transistor (114) auquel est appliqué le signal de l'interrupteur de valeur de seuil (20) est l'un des ces transistors PNP.

4. Dispositif de protection selon l'une des revendications 1 à 3, **caractérisé** **par** **le** **fait** **que** le système électronique comprend une mémoire opératrice (44) résistant à la radiation gamma, qui, après la remise en circuit et une nouvelle initialisation du système électronique, peut retenir des données variables avant l'évenement de radiation.

5. Dispositif de protection selon l'une des revendications 1 à 4, **caractérisé** **par** **le** **fait** **que** la seuil de réponse de l'interrupteur de valeur de seuil (20) est ajustable.

6. Dispositif de protection selon l'une des revendications 1 à 5, **caractérisé** **par** **le** **fait** **que** les moyens de minuterie (26) sont susceptibles de produire deux signaux de mise hors circuit (60,62) qui sont appliqués chacun par un intervalle de temps, l'intervalle de temps du premier signal de mise hors circuit (60) comprenant toujours complètement l'intervalle de temps du second signal de mise hors circuit (60).

7. Dispositif de protection selon la revendication 6, **caractérisé** **par** **le** **fait** **que** l'intervalle de temps des signaux de mise hors circuit (60,62) sont conjointement ajustables, la position de l'un des intervalles de temps (62) à l'intérieur de l'autre est guarantie pour chaque ajustement.

8. Dispositif de protection selon la revendication 7, **caractérisé** **par** **le** **fait** **que** les moyens de minuterie (26) peuvent être appliqués par un signal de sortie de la mémoire d'évenement (24) à une tension d'alimentation.

9. Dispositif de protection selon la revendication 8, **caractérisé** **par** **le** **fait** **que**
(a) la tension d'alimentation est susceptible d'alimenter des moyens de transistor (200,210) introduisant le premier signal de mise hors circuit (60),
(b) la tension d'alimentation est susceptible de commander un second transistor (222) par un élément de retard (218,216,226), le second transistor (222) introduisant le second signal de mise hors circuit (62),
(c) la tension d'alimentation est, en outre, appliquée à un générateur de rampe (190,188) par lequel une tension s'acroîssant avec le temps, est appliquée à deux comparateurs (189,184) dont un premier (184) commute à une valeur de seuil relativement faible et un second (18) commute à une valeur de seuil relativement élevée de la tension accroissante,
(d) la sortie du premier comparateur (184) commande le second transistor (222) de sorte à terminer le second signal de mise hors circuit (62),
(e) la sortie du second comparateur (180) commande les premiers moyens de transistor (200,210) de sorte à terminer le premier signal de mise hors circuit (60), et
(f) le taux de montée de la tension du générateur de rampe (190,188) est ajustable par un seul vérin (190).

10. Dispositif de protection selon la revendication 9, **caractérisé** **par** **le** **fait** **que** le générateur de rampe comprend un condensateur (188) susceptible d'être chargé par une résistance (190) ajustable par la tension d'alimentation, condensateur auquel la tension acroissante est captée.

11. Dispositif de protection selon la revendication 9 ou 10, **caractérisé** **par** **le** **fait** **que**
(a) un transistor PNP (200) est appliqué, avec un diviseur de tension (202,204) disposé dans le circuit de collecteur, à la tension d'alimentation,
(b) un premier transistor NPN (210) agissant comme interrupteur et destiné à produire le premier signal de mise hors circuit (60), est susceptible d'être commandé par une tension captée au diviseur de tension (202,204),
(c) le transistor PNP (200) est appliqué, avec sa base, à un diviseur de tension (206, 208) relié d'un côté à la tension d'alimentation, et de l'autre côté à la sortie du second comparateur (180),
(d) un second transistor NPN (214) est appliqué, avec une résistance de collecteur, à la tension d'alimentation,
(e) un condensateur (226) est disposé parallèlement à la voie émetteur-collecteur du second transistor NPN (214),
(f) le second transistor NPN (214) est appliqué, avec sa base, à un diviseur de tension (218,220) relié d'un côté à la sortie du premier comparateur (184), et de l'autre côté à la masse, et
(g) un troisième transistor NPN (222) agissant comme interrupteur et destiné à produire le second signal de mise hors circuit, est relié, avec sa base, au collecteur du second transistor NPN (214).

12. Dispositif de protection selon la revendication 11, **caractérisé** **par** **le** **fait** **que** la résistance de collecteur (216) du second transistor NPN (214) est reliée par une diode Zener (218) à la tension d'alimentation.

13. Dispositif de protection selon l'une des revendications 9 à 12, **caractérisé** **par** **le** **fait** **que** les entrées de tension d'alimentation des comparateurs (180,184) sont appliquées à la tension d'alimentation par un circuit RC (172,240).

14. Dispositif de protection selon l'une des revendications 9 à 13, **caractérisé** **par** **le** **fait** **que** les sorties des comparateurs (180,182) sont maintenues au potentiel de masse par un interrupteur électronique (234) pour un bref delais prédeterminé après avoir appliqué la tension d'alimentation au système temporisé (26).

15. Dispositif de protection selon la revendication 14, **caractérisé** **par** **le** **fait** **que**
(a) un circuit en série constitué d'un condensateur (228) disposé sur le côté de la tension d'alimentation et de deux résistances ohmiques (230,232) est disposé entre la tension d'alimentation et la masse,
(b) la connexion entre les deux résistances (230,232) est reliée à la base d'un transistor NPN (234), et
(c) l'émetteur du transistor NPN (234) est relié à la masse, et le collecteur du transistor NPN (234) est relié par une diode (236,238) à la fois aux sorties des comparateurs (180,184).

16. Dispositif de protection selon l'une des revendications 1 à 15, **caractérisé** **par** **le** **fait** **qu**'afin de proteger un calculateur digital (36) alimenté par un bloc d'alimentation et comprenant des condensateurs à accumulation d'énergie, le bloc d'alimentation peut être mis hors circuit par le signal de mise hors circuit (60) avec l'intervalle de temps plus long par un premier interrupteur électronique, et une décharge des consensateurs (38) peut être introduite par le signal de mise hors circuit (62) avec l'intervalle de temps plus court par une second interrupteur électronique (40).

17. Dispositif de protection selon l'une des revendications 1 à 16, **caractérisé** **par** **le** **fait** **qu**'afin de vérifier l'existence de court-circuits et d'interruptions, des signaux de simulation électriques peuvent être appliqués au détecteur (16) du capteur (10).

18. Dispositif de protection selon l'une des revendications 1 à 17, **caractérisé** **par** **le** **fait** **qu**'à des fins de vérification, un flash peut être appliqué au détecteur (16) du capteur (10).

19. Dispositif de protection selon l'une des revendications 1 à 19, **caractérisé** **par** **le** **fait** **que** le capteur (10) est construit de composants discrets exemptes de latchup.

20. Dispositif de protection selon la revendication 19, **caractérisé** **par** **le** **fait** **que** le capteur (10) est assemblé comme circuit hybride en couche épaisse métalliquement blindé.

21. Dispositif de protection selon la revendication 20, **caractérisé** **par** **le** **fait** **que** le blindage présente une fenêtre (14) par laquelle un flash peut être appliqué au détecteur (16) à des fins de vérification.

22. Dispositif de protection selon l'une des revendications 1 à 21, **caractérisé** **par** **le** **fait** **que** le capteur (10) ne fonctionne qu'avec une seule tension d'alimentation.

23. Dispositif de protection selon la revendication 22, **caractérisé** **par** **le** **fait** **que** le capteur (10) présente plusieurs détecteurs (16A,16B) montés en parallèle.

24. Dispositif de protection selon l'une des revendications 1 à 23, **caractérisé** **par** **le** **fait** **que**
(a) une entrée de tension d'alimentation (286) est filée avec un condensateur d'une capacité relativement élevée contre la masse,
(b) des modules (288,290) du système électronqiue sont filées avec des condensateurs (38) à accumulation d'énergie d'une capacité relativement faible,
(c) le premier interrupteur électronique (32) destiné à interrompre la tension d'alimentation est disposé sur le côté des modules du condensateur d'une capacité relativement élevée, et
(d) le second interrupteur électronique (40) est disposé sur le côté des modules du premier interrupteur électronique (32) de sorte qu'après l'ouverture du premier interrupteur électronique (32), seulement les condensateurs (38) d'une capacité relativement faible peuvent être déchargés par celui-ci.

25. Dispositif de protection selon l'une des revendications 1 à 24, **caractérisé** **par** **le** **fait** **que** tous les signaux de sortie sont appliqués aux collecteurs "ouverts" de transistors qui, dans l'état activé, sont non-conductifs.
